# EUROPEAN PATENT SPECIFICATION

(11) **EP 3 008 029 B1**
(45) Date of publication and mention of the grant of the patent: **19.04.2017**
(21) Application number: 14730456.2
(22) Date of filing: 27.05.2014
(51) Int. Cl.: C04B 20/06, C08J 9/16, C04B 16/08, B01J 8/08

(54) **METHOD AND A DEVICE FOR PREPARATION OF EXPANDED MICROSPHERES**
VERFAHREN UND VORRICHTUNG ZUR HERSTELLUNG ERWEITERTER MIKROKUGELN
PROCÉDÉ ET DISPOSITIF DE PRÉPARATION DE MICROSPHÈRES EXPANSÉES

(30) Priority: 12.06.2013 EP 13171708
(43) Date of publication of application: 20.04.2016
(73) Proprietor: Akzo Nobel Chemicals International B.V., 6824 BM Arnhem (NL)
(72) Inventor: SVEDBERG, Lars-Olof, S-862 34 Kvissleby (SE); AJDÉN, Per, S-861 92 Bergeforsen (SE)
(74) Representative: Akzo Nobel IP Department
(86) International application number: PCT/EP2014/060972
(87) International publication number: WO 2014/198532

(56) References cited:
- WO-A1-2004/056549
- WO-A2-03/051793
- JP-A- 2005 254 213
- US-A- 3 023 175
- US-A- 4 513 106
- US-A- 4 778 829
- US-A- 5 753 157
- US-A1- 2009 093 558

## Description

The present invention relates to a method of producing expanded thermoplastic microspheres and a device therefore.

Thermally expandable microspheres are known in the art and described in detail in, for example, US Patent No. 3615972. Various grades of expandable microsphere, having different expansion temperature, are commercially available from AkzoNobel under the trademark Expancel™, both as dry free flowing microspheres and as an aqueous slurry of microspheres.

Such expandable microspheres comprise a blowing agent encapsulated within a thermoplastic shell. Upon heating, the blowing agent evaporates to increase the internal pressure, at the same time as the shell softens, resulting in significant expansion of the microspheres, normally from 2 to 5 times their diameter.

Thermoplastic microspheres can be used in various applications as unexpanded or pre-expanded. Examples of products where dry (essentially water free) pre-expanded microspheres are used are as sensitizer in emulsion explosives and as light weight filler in solvent based paints and various thermosetting materials such as cultured marble, polyester putty and artificial wood. In many products, such as water based paints and coatings, thermal printing papers, porous ceramics and emulsion explosives, wet pre-expanded microspheres are used, normally as an aqueous slurry.

Transporting pre-expanded microspheres require significant space, for which reason the unexpanded microspheres often are transported to the end user for the expanded microspheres and expanded on-site. The microspheres may then be expanded close to or directly into a process for producing the final product, e.g. any of those mentioned above.

Various methods and devices have been developed for expanding thermoplastic microspheres.

US 5484815 and US 7192989 disclose methods and devices suitable for expanding dry microspheres. JP 2005 254213 discloses an apparatus comprising a reactor tube in which the microcapsules are heated to expansion temperature and into which the aqueous slurry of unexpanded expansible microcapsules is force-fed and into which also high-temperature steam is force-fed by applying a back pressure exceeding the pressure of the steam. After heating upon passing through the tube at a certain passage velocity, the heat expansible microcapsules are discharged into the air and expanded. US 4513106 discloses a method and a device suitable for expanding microspheres in an aqueous slurry by introducing steam to the slurry in a pressure zone in an amount sufficient for heating the microspheres and at least partially expand them, followed by allowing the partially expanded microspheres to leave the pressure zone under a pressure drop whereby the microspheres are further expanded and accelerated into a stream with a velocity of at least 1 m/s. WO03/051793 discloses an apparatus that is suitable to receive a slurry of unexpanded expandable polymeric microspheres which are mixed with steam to cause thermal expansion of the microspheres and to provide a resulting stream of wet expanded microballoons.
In the reaction tube, a motive fluid in the form of a gas is used to propel the slurry of microspheres which come in contact with a stream of steam. While steam generator, steam conduit, slurry tank and fluid material conduit are in fluid communication with the treatment zone, there seems to be no back pressure generator in the apparatus. An advantage of expanding microspheres in an aqueous slurry is that dusting is avoided. However, it is desirable to further improve the existing technology of expanding microspheres in a slurry.

It is an object of the present invention to provide a method and a device for expanding microspheres in a slurry without the need to introduce extra water.

It is another object of the invention to provide a method and a device for expanding microspheres in a slurry that is flexible in respect of which liquid is used for the slurry.

It is a further object of the invention to provide a method and a device for expanding microspheres in a slurry that is flexible in respect of the means for heating the microspheres.

It is still a further object of the invention to provide a method and a device for expanding microspheres in a slurry with low risk for agglomeration of the microspheres.

It is still a further object of the invention to provide a method and a device for expanding microspheres in a slurry that can be used also for a broad range of microsphere grades having various expansion temperatures.

According to the invention, it has been found possible to achieve these and other objects by a method and a device according to the appended claims.

More specifically, the invention concerns a method for the preparation of expanded thermoplastic microspheres from unexpanded thermally expandable thermoplastic microspheres comprising a thermoplastic polymer shell encapsulating a blowing agent, said method comprising:
(a) feeding a slurry of such expandable thermoplastic microspheres in a liquid medium into a heating zone;
(b) heating the slurry in the heating zone, without direct contact with any fluid heat transfer medium, so the expandable microspheres reach at least a temperature at which they would have started to expand at atmospheric pressure, and maintaining a pressure in the heating zone sufficiently high so the microspheres in the slurry do not fully expand; and,
(c) withdrawing the slurry of expandable microspheres from the heating zone into a zone with a pressure sufficiently low for the microspheres to expand.

The invention further concerns a device for expanding unexpanded thermally expandable thermoplastic microspheres comprising a thermoplastic polymer shell encapsulating a blowing agent, said device comprising a heating zone having an inlet and an outlet and being capable of withstanding a pressure of at least 4 bars, means for feeding a slurry of unexpanded expandable thermoplastic microspheres in a liquid medium into the heating zone and capable of generating a pressure of at least 4 bars in the heating zone; and, means for heating the slurry of expandable microspheres to a temperature of at least 60°C without direct contact with any fluid heat transfer medium.

Unexpanded thermally expandable thermoplastic microspheres are hereinafter referred to as expandable microspheres. The particle size of expandable microspheres can vary within wide limits and may be selected with respect to the desired properties of the product in which they are used. In most cases, the preferred volume median diameter, as determined by laser light scattering on a Malvern Mastersizer Hydro 2000 SM apparatus on wet samples, is from 1 µm to 1 mm, preferably from 2 µm to 0.5 mm and particularly from 3 µm to 100 µm. The diameter of the microspheres increases at expansion, for example by a factor from 2 to 5.

The liquid medium of the slurry of expandable microspheres may be any liquid that is inert in respect of the microspheres and can withstand the temperature to which the slurry is heated. In many cases water or a water based liquid is preferred, thus forming an aqueous slurry, but depending on the intended use of the expanded microspheres it may also be preferred with organic liquids for the slurry, such as at least one of vegetable oil, mineral oil and glycerol, which organic liquids may be free from water. Since no steam or water in any other form needs to be added to the slurry in the method of the invention, it is possible to prepare a slurry of water free expanded microspheres that can be used directly in applications where no water is desired. Furthermore, as no other fluid media needs to be added to the slurry, it is possible to prepare a slurry of expanded microspheres having a high and controlled solids content.

In most commercial methods of producing expandable microspheres they are usually first obtained in an aqueous slurry, and such a slurry can be used directly in the method of the invention, optionally after dilution or dewatering to a desired content of microspheres. On the other hand, such an aqueous slurry may be dried to obtain essentially water free microspheres that can be used for preparing a slurry in an organic liquid.

The content of expandable microspheres in the slurry depends on what is desired for the product obtained after expansion. The upper limit is limited by the pumpability of the slurry and by the transportability of the slurry through the heating zone. In most cases the content of expandable microspheres is suitably from 5 to 50 wt%, preferably from 10 to 40 wt% and most preferably from 15 to 30 wt%.

The slurry of expandable microspheres flows through the heating zone that can be made up of any vessel, pipe or tube provided with an inlet and an outlet and withstanding the pressure maintained therein. The means for heating the slurry therein may, for example, be a fluid heat transfer medium not being in direct contact with the slurry, electric heating elements or microwaves. For example, the heating zone may be a heat exchanger comprising at least one pipe or tube surrounded by a heat transfer medium not being in direct contact with the slurry of expandable microspheres. A heat exchanger may, for example, comprise several preferably parallel pipes or tubes, for example from 2 to 10 or from 3 to 7 pipes or tubes, preferably connected to a common inlet and a common outlet. It is also possible to have only one pipe or tube. Using a single pipe or tube (i.e. only one) involves the advantage of decreasing the risk for uneven flow distribution caused by partial clogging in one of several parallel pipes. Such a single pipe or tube is preferably surrounded by a heat transfer media, such as hot water, preferably being positioned in a vessel or tank containing the heat transfer media.

The heat transfer medium may be any suitable fluid medium such as hot water, steam or oil. As an alternative, heat may be provided by electric heating elements, e.g. inside or outside the heating zone or in the walls thereof, or any combination thereof. As a further alternative, heating may be provided by electromagnetic radiation such as microwaves.

Through the invention it is possible to expand microsphere grades requiring higher temperature than practically achievable by steam, e.g. by using electric heating elements or hot oil as a heat transfer medium. For example, it is possible to expand microspheres requiring temperatures exceeding 200°C. It is also possible or to expand microspheres that may collapse or in any other way be damaged at too high temperatures by using a heat transfer medium having a comparatively low temperature, for example from 60 to 100°C, such as hot water.

The vessel or the at least one pipe or tube in which the slurry of expandable microspheres flows is preferably of a thermally conductive material like steel or cupper, particularly if the heating of the slurry is provided by means of a fluid heat transfer medium or by electric heating elements. If the heating is provided by electromagnetic radiation, the vessel or at least one pipe or tube is preferably of a material permeable for such radiations, such as various kinds of polymeric materials.

In a heat exchanger comprising at least one pipe or tube, such at least one pipe or tube may, for example, each have an inner diameter from 2 to 25 mm or more preferably the inner diameter is from 4 to 15 mm or most preferably from 6 to 12 mm.The thickness of the walls of the at least one pipe or tube is suitably from 0.5 to 3 mm, preferably from 0.7 to 1.5 mm.

If heating is made by means of electric heating elements, such elements may e.g. be provided outside and/or inside at least one pipe or tube, for example a single pipe or tube. Such a pipe or tube may, for example, have an inner diameter from 20 to 80 mm or from 35 to 65 mm. For example, an electric heating element may be provided in the centre inside a pipe or tube so the slurry of expandable microspheres flow in the gap around that heating element. Such an electric heating element may itself be a pipe or tube with the primary electric heating source inside thereof so the heat is transferred through the wall to the slurry flowing in the gap. Preferably electric heating elements are provided both inside and outside the at least one pipe or tube.

The optimal dimensions and the capacity of the means for heating the slurry is determined by the flow rate of slurry, slurry concentration and temperature of incoming slurry and should be sufficient for the slurry to reach a temperature high enough for the microspheres to expand when pressure drops after passing the outlet of the heating zone. This temperature is always higher than the volatilization temperature of the blowing agent of the specific microsphere.

The slurry of expandable microspheres is fed into the heating zone through the inlet thereof, preferably by means of a pump providing sufficiently high pressure in the heating zone so the microspheres do not fully expand therein. The microspheres may expand partially within the heating zone, e.g. to a volume of from 10 to 80% or from 20 to 70% of the volume after the completed expansion outside the heating zone, but may also be prevented from expanding at all within the heating zone. Examples of suitable pumps include hydraulic diaphragm pumps, piston pumps, screw pumps (e.g. eccentric screw pumps), gear pumps, rotary lobe pumps, centrifugal pumps,etc. Hydraulic diaphragm pumps are particularly preferred. The pump preferably also creates the force for transporting the slurry through the heating zone to the outlet thereof. The device may further be provided with a conduit for transportation of the slurry of expandable microspheres to the pump, for example from a tank holding the slurry.

In order to maintain sufficiently high pressure in the heating zone, the slurry of expandable microspheres are withdrawn from the heating zone through an outlet thereof creating a pressure drop corresponding to the pressure difference between inside the heating zone and outside the heating zone. The pressure drop may be created by any suitable means for, such as a flow area restriction, for example a valve, a nozzle or any other kind of narrow passage. The outlet of the heating zone may, for example, be a preferably insulated pipe or tube optionally having a flow area restriction at the end thereof, such as an opening having a diameter from 0.9 to 0.05 times or from 0.5 to 0.05 times, preferably from 0.3 to 0.1 times the inner diameter of that pipe or tube. However, a flow area restriction or any other special means is not necessary as the pressure drop created by an outlet having the same flow area as the heating zone usually is sufficient to prevent completion of the expansion of the microspheres within the heating zone. The pipe or tube may be stiff or flexible, which in the latter easily can be directed to a desired exit point for the microspheres without moving the entire device.

The exact pressure required in the heating zone depends on the temperature and the type of microsphere. Preferably the pressure maintained in the heating zone is at least 4 bars, most preferably at least 10 bars. The upper limit is determined by practical considerations and may, for example, be up to 40 bars or up to 50 bars. The heating zone should thus preferably being capable of withstanding such a pressure.

The temperature of the expandable microspheres in the heating zone is usually essentially the same as the temperature of the slurry therein. The exact temperature to which the slurry is heated depends on the grade of microspheres. For most grades of microspheres the temperature is preferably within the range from 60 to 160°C, preferably from 80 to 160°C or from 100 to 150°C, although higher temperatures, such as 200°C or even 250°C or higher may be needed for some grades of microspheres. The means for heating the slurry should thus preferably be capable of heating the slurry to such a temperature.

In the heating zone a flow of a slurry of expandable microspheres is transported from the inlet to the outlet and heated under pressure to a temperature high enough for the microspheres to optionally partially expand therein and at least to expand when the pressure drops at the outlet of the heating zone and they enter the zone with a sufficiently low pressure. The pressure in that zone is usually essentially atmospheric pressure but may be maintained higher or lower depending on the temperature of the microspheres. At this stage the microspheres are usually also cooled down by the surrounding air in that zone. The average residence time of the microspheres in the heating zone is preferably long enough to assure that a sufficiently high temperature of the slurry is reached and maintained for subsequent expansion. In order to assure production of a high and even quality, the device may optionally further be provided with a pulsation damper stabilising the flow of the slurry.

When the expansion proceeds or starts at the pressure drop at the outlet of the heating zone the flow of microspheres also accelerates significantly. At the same time the microspheres automatically are cooled down to such a low temperature that the expansion stops, forming the point where the expansion is completed. In order to optimize the disintegration of the microspheres and avoid agglomeration it is preferred if the pressure drop takes place over as short a distance as possible in the flow direction.

As disintegration and cooling of the microspheres after passing the pressure drop at the outlet of the heating zone occur rapidly, the expanded microspheres are usually substantially free from agglomerates. The expanded microspheres can immediately be used for its intended purpose or be packed into plastic bags, cartridges or other suitable packages.

The method and device of the invention is particularly useful for on-site expansion at production of e.g. emulsion explosives, paint, polyester putty, artificial wood formulations based on polyester, polyurethane or epoxy, cultured marble based on epoxy, porous ceramics, gypsum board, underbody coatings, elastomers, crack fillers, sealants, adhesives, phenolic resins, stucco, cable filling compound, modelling clay, microcellular polyurethane foams, coatings for thermal printing paper and other kind of coatings. The flow of expanded microspheres exciting the device may then be added directly into the production lines of such products. For example, the flow of expanded microspheres can be added, in-line, directly into the emulsion flow during the production of emulsion explosives or directly into the emulsion flow during the filling of a bore hole with emulsion explosives from a truck. In the latter case the explosives can be sensitized at the mining site and be transported unsensitized to the mine.

The method and the expansion device according to the invention can be used for all known kinds of expandable thermoplastic microspheres, such as those marketed under the trademark Expancel™. Useful expandable thermoplastic microspheres and their preparation are also described in, for example, US Patents 3615972, 3945956, 4287308, 5536756, 6235800, 6235394 and 6509384, 6617363 and 6984347, in US Patent Applications Publications US 2004/0176486 and 2005/0079352, in EP 486080, EP 566367, EP 1067151, EP 1230975, EP 1288272, EP 1598405, EP 1811007 and EP 1964903, in WO 2002/096635, WO 2004/072160, WO 2007/091960, WO 2007/091961 and WO 2007/142593, and in JP Laid Open No. 1987-286534 and 2005-272633.

Suitable thermoplastic microspheres preferably have a thermoplastic shell made from polymers or co-polymers obtainable by polymerizing various ethylenically unsaturated monomers, which can be nitrile containing monomers, such as acrylonitrile, methacrylonitrile, alpha-chloroacrylonitrile, alpha-ethoxyacrylonitrile, fumaronitrile, crotonitrile, acrylic esters such as methylacrylate or ethyl acrylate, methacrylic esters such as methyl methacrylate, isobornyl methacrylate or ethyl methacrylate, vinyl halides such as vinyl chloride, vinylidene halides such as vinylidene chloride, vinyl pyridine, vinyl esters such as vinyl acetate, styrenes such as styrene, halogenated styrenes or alphamethyl styrene, or dienes such as butadiene, isoprene and chloroprene. Any mixtures of the above mentioned monomers may also be used.

It may sometimes be desirable that the monomers for the polymer shell also comprise crosslinking multifunctional monomers, such as one or more of divinyl benzene, ethylene glycol di(meth)acrylate, diethylene glycol di(meth)acrylate, triethylene glycol di(meth)acrylate, propylene glycol di(meth)acrylate, 1,4-butanediol di(meth)acrylate, 1,6-hexanediol di(meth)acrylate, glycerol di(meth)acrylate, 1,3-butanediol di(meth)acrylate, neopentyl glycol di(meth)acrylate, 1,10-decanediol di(meth)acrylate, pentaerythritol tri(meth)acrylate, pentaerythritol tetra(meth)acrylate, pentaerythritol hexa(meth)acrylate, dimethylol tricyclodecane di(meth)acrylate, triallylformal tri(meth)acrylate, allyl methacrylate, trimethylol propane tri(meth)acrylate, trimethylol propane triacrylate, tributanediol di(meth)acrylate, PEG #200 di(meth)acrylate, PEG #400 di(meth)acrylate, PEG #600 di(meth)acrylate, 3-acryloyloxyglycol monoacrylate, triacryl formal or triallyl isocyanate, triallyl isocyanurate etc. If present, such crosslinking monomers preferably constitute from 0.1 to 1 wt%, most preferably from 0.2 to 0.5 wt% of the total amounts of monomers for the polymer shell. Preferably, the polymer shell constitutes from 60 to 95 wt%, most preferably from 75 to 85 wt%, of the total microsphere.

The softening temperature of the polymer shell, normally corresponding to its glass transition temperature (T_{g}), is preferably within the range from 50 to 250 °C, or from 100 to 230 °C.

The blowing agent in a microsphere is normally a liquid having a boiling temperature not higher than the softening temperature of the thermoplastic polymer shell. The blowing agent, sometimes also referred to as foaming agent or propellant, may at least one hydrocarbon such as n-pentane, isopentane, neopentane, butane, isobutane, hexane, isohexane, neohexane, heptane, isoheptane, octane and isooctane, or mixtures thereof. Also, other hydrocarbon types may also be used, such as petroleum ether, and chlorinated or fluorinated hydrocarbons, such as methyl chloride, methylene chloride, dichloro ethane, dichloro ethylene, trichloro ethane, trichloro ethylene, trichlorofluoro methane, etc. Particularly preferred blowing agents comprise at least one of isobutane, isopentane, isohexane, cyclohexane, isooctane, isododecane, and mixtures thereof, preferably isooctane. The blowing agent suitably makes up from 5 to 40 weight % of the microsphere.

The boiling point of the blowing agent at atmospheric pressure may be within a wide range, preferably from -20 to 200 °C, most preferably from -20 to 150 °C, and most preferably -20 to 100 °C.

The temperature at which the expandable microspheres start expanding depends on a combination of the blowing agent and the polymer shell and microspheres having various expansion temperatures are commercially available. The temperature at which the microspheres start expanding at atmospheric pressure is referred to as Tₛₜₐᵣₜ. The expandable microspheres used in the present invention preferably have a Tₛₜₐᵣₜ from 40 to 230°C, most preferably from 60 to 180°C.

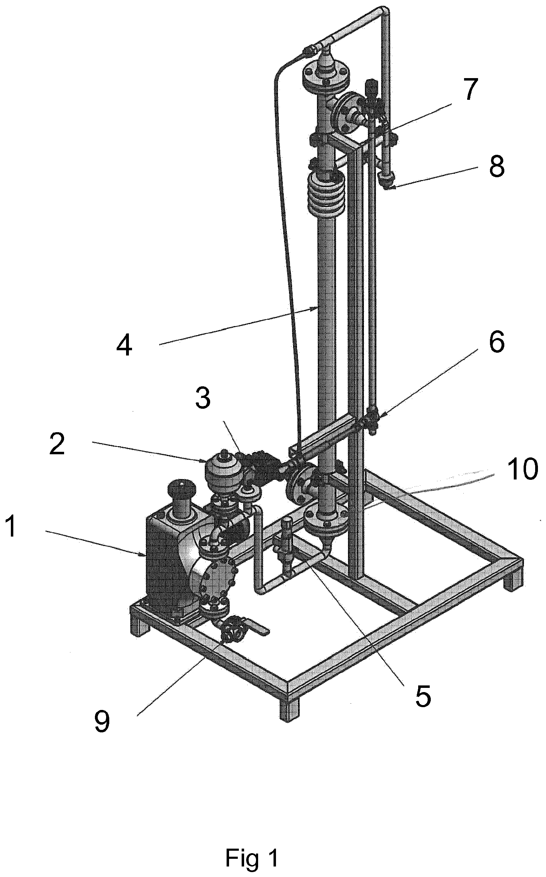

The appended Figure illustrates an embodiment of the invention.

The Figure shows a device comprising a hydraulic diaphragm pump 1 connected to a heat exchanger 4 (forming a heating zone) and a pulsation damper 2. The heat exchanger 4 is provided with an inlet 10 and an outlet 8 in the form of a pipe provided with a flow area restriction at the end in the form of a nozzle. The heat exchanger further comprises one or a plurality of tubes (not shown) surrounded by a heat transfer medium (not shown) such as hot water, steam or oil. The device further comprises a pressure gauge 3, a safety valve 5, a control valve 6, a thermometer 7 and a 3-way valve 9.

The device is operated by pumping a slurry of expandable microspheres, e.g. from a slurry tank (not shown), by means of the hydraulic diaphragm pump 1 through the heat exchanger 4, in which it is heated by the heat transfer medium to a temperature at which the microspheres start to expand or at least would have started to expand at atmospheric pressure. The hydraulic diaphragm pump creates a pressure sufficient for transporting the slurry through the heat exchanger 4 and prohibiting complete expansion of the microspheres therein. The hot slurry flows out into the free air through the outlet 8, optionally provided with a flow area restriction, creating a pressure drop to atmospheric pressure, resulting in rapid expansion and cooling of the microspheres in free air. The pulsation damper 2 inhibits fluctuations of the flow of the slurry from the hydraulic diaphragm pump 1. The pressure and the temperature in the heat exchanger can be monitored by the pressure gauge 3 and the thermometer 7, respectively. The equipment can be cleaned by exchanging the slurry of expandable microspheres for e.g. washing water with the aid of the 3-way valve 9 prior to the pump 1. The flow and pressure of the heat transfer medium used in the heat exchanger 4 is regulated by the control valve 6.

### Example 1:

Expandable microspheres Expancel™ 051-40 from AkzoNobel were expanded by using a device according to the appended Figure. An aqueous slurry of 15 wt% microspheres at a temperature of 20°C was pumped at a rate of 3 litre/min through the heat exchanger comprising seven tubes, each with an inner diameter of 10 mm, an outer diameter of 12 mm and a length of 1.95 meter, surrounded by hot steam as heat transfer medium. The pump generated a pressure of 30 bars that was maintained within the heat exchanger and the steam transferred thermal energy sufficient for heating the slurry to 130°C. The microspheres exited the heat exchanger through the outlet provided with a nozzle having an opening of 1.5 mm into the open air of 20°C and expanded to reach a density of 22 g/dm³. The expanded microsphere product had a solids content of 15 wt% and microscopic investigation showed that the product was completely free from agglomerates.

### Example 2:

Expandable microspheres Expancel™ 031 from AkzoNobel were expanded by using a device comprising a single 5.8 m long cupper pipe positioned in a tank filled with hot water maintained at a temperature of 100°C. The cupper pipe had an inner diameter of 6.3 mm and an outer diameter of 7.8 mm, but did not have any flow area restriction. An aqueous slurry of 20 wt% microspheres at a temperature of 20°C was pumped with a diaphragm pump at a rate of 80 litre/hr through the cupper pipe surrounded by the hot water as heat transfer medium. The diaphragm pump generated a pressure of 6 bars. The microspheres exited the cupper pipe heat exchanger through the outlet and reached after the final expansion a density of 24 g/dm³. The expanded microsphere product had a solids content of 20 wt% and microscopic investigation showed that the product was essentially free from agglomerates.

## Claims

1. A method for the preparation of expanded thermoplastic microspheres from unexpanded thermally expandable thermoplastic microspheres comprising a thermoplastic polymer shell encapsulating a blowing agent, said method comprising:
(a) feeding a slurry of such expandable thermoplastic microspheres in a liquid medium into a heating zone;
(b) heating the slurry in the heating zone, without direct contact with any fluid heat transfer medium, so the expandable microspheres reach at least a temperature at which they would have started to expand at atmospheric pressure, and maintaining a pressure in the heating zone sufficiently high so the microspheres in the slurry do not fully expand; and,
(c) withdrawing the slurry of expandable microspheres from the heating zone into a zone with a pressure sufficiently low for the microspheres to expand.

2. A method as claimed in claim 1, wherein the pressure in the heating zone is maintained from 5 to 50 bars.

3. A method as claimed in any one of the claims 1-2, wherein the slurry of expandable microspheres is heated in the heating zone to a temperature from 60 to 160°C.

4. A method as claimed in any one of the claims 1-3, wherein the slurry of expandable microspheres flows through a heating zone being a heat exchanger comprising at least one pipe or tube surrounded by a heat transfer medium not being in direct contact with the slurry of expandable microspheres.

5. A method as claimed in claim 4, wherein the at least one pipe or tube each have an inner diameter from 2 to 25 mm.

6. A method as claimed in any one of the claims 1-3, wherein heat is provided by electric heating elements.

7. A method as claimed in any one of the claims 1-6, wherein the slurry of expandable microspheres are withdrawn from the heating zone through an outlet thereof creating a pressure drop corresponding to the pressure difference between inside the heating zone and outside the heating zone.

8. A method as claimed in claim 7, wherein the outlet is provided with a flow area restriction for creating the pressure drop.

9. A method as claimed in any one of the claims 1-8, wherein the slurry of expandable microspheres is withdrawn from the heating zone into a zone of atmospheric pressure.

10. A method as claimed in any one of the claims 1-9, wherein slurry of expandable microspheres is fed into the heating zone by means of a pump providing sufficiently high pressure in the heating zone for the microspheres not to fully expand therein.

11. A device for expanding unexpanded thermally expandable thermoplastic microspheres comprising a thermoplastic polymer shell encapsulating a blowing agent, said device comprising a heating zone having an inlet and an outlet and being capable of withstanding a pressure of at least 4 bars, means for feeding a slurry of unexpanded expandable thermoplastic microspheres in a liquid medium into the heating zone and capable of generating a pressure of at least 4 bars in the heating zone; and, means for heating the slurry of expandable microspheres to a temperature of at least 60°C without direct contact with any fluid heat transfer medium.

12. A device as claimed in claim 11, wherein the outlet is provided with a flow area restriction sufficient for creating a pressure drop corresponding to the pressure difference between inside the heating zone and outside the heating zone.

13. A device as claimed in any one of the claims 11-12, wherein the heating zone is a heat exchanger comprising at least one pipe or tube surrounded by a heat transfer medium not being in direct contact with the slurry of expandable microspheres.

14. A device as claimed in any one of the claims 11-13, wherein the heating zone comprises a single pipe or tube surrounded by a heat transfer medium not being in direct contact with the slurry of expandable microspheres.

15. A device as claimed in any one of the claims 11-12, wherein the heating zone comprises at least one pipe or tube and electric heating elements provided inside and/or outside said at least one pipe or tube.

## Patentansprüche

1. Verfahren zur Herstellung erweiterter thermoplastischer Mikrokugeln aus nicht erweiterten, thermisch erweiterbaren thermoplastischen Mikrokugeln, umfassend eine thermoplastische Polymerhülle, die ein Treibmittel einkapselt, wobei das Verfahren folgende Schritte umfasst:
(a) Einführen einer Aufschlämmung aus derartigen erweiterbaren thermoplastischen Mikrokugeln in einem flüssigen Medium in einen Erhitzungsbereich;
(b) Erhitzen der Aufschlämmung in dem Erhitzungsbereich ohne unmittelbaren Kontakt mit einem flüssigen Wärmeübertragungsmittel, so dass die erweiterbaren Mikrokugeln zumindest eine Temperatur erreichen, bei welcher sie unter atmosphärischem Druck angefangen hätten sich zu erweitern, und Aufrechterhalten eines so hohen Drucks in dem Erhitzungsbereich, dass sich die Mikrokugeln in der Aufschlämmung nicht vollständig erweitern; sowie
(c) Abziehen der Aufschlämmung aus erweiterbaren Mikrokugeln aus dem Erhitzungsbereich in einen Bereich mit einem Druck, der niedrig genug ist, so dass sich die Mikrokugeln erweitern können.

2. Verfahren nach Anspruch 1, wobei der Druck in dem Erhitzungsbereich zwischen 5 und 50 Bar gehalten wird.

3. Verfahren nach einem der Ansprüche 1 bis 2, wobei die Aufschlämmung aus erweiterbaren Mikrokugeln in dem Erhitzungsbereich auf eine Temperatur zwischen 60 und 160 °C erhitzt wird.

4. Verfahren nach einem der Ansprüche 1 bis 3, wobei die Aufschlämmung aus erweiterbaren Mikrokugeln durch einen Erhitzungsbereich fließt, welcher aus einem Wärmetauscher mit mindestens einem Rohr oder Schlauch besteht, das/der von einem Wärmeübertragungsmittel umgeben ist, welches nicht in unmittelbarem Kontakt mit der Aufschlämmung aus erweiterbaren Mikrokugeln steht.

5. Verfahren nach Anspruch 4, wobei das mindestens eine Rohr oder der mindestens eine Schlauch jeweils einen Innendurchmesser von 2 bis 25 mm aufweist.

6. Verfahren nach einem der Ansprüche 1 bis 3, wobei Wärme von elektrischen Heizelementen bereitgestellt wird.

7. Verfahren nach einem der Ansprüche 1 bis 6, wobei die Aufschlämmung aus erweiterbaren Mikrokugeln aus dem Erhitzungsbereich durch einen Auslass desselben abgezogen wird, wodurch ein Druckabfall entsprechend dem Druckunterschied zwischen dem Inneren des Erhitzungsbereiches und dem Äußeren des Erhitzungsbereiches erzeugt wird.

8. Verfahren nach Anspruch 7, wobei der Auslass mit einer Strömungsquerschnittsbegrenzung zur Erzeugung des Druckabfalls versehen ist.

9. Verfahren nach einem der Ansprüche 1 bis 8, wobei die Aufschlämmung aus erweiterbaren Mikrokugeln aus dem Erhitzungsbereich in einen Bereich mit atmosphärischem Druck abgezogen wird.

10. Verfahren nach einem der Ansprüche 1 bis 9, wobei eine Aufschlämmung aus erweiterbaren Mikrokugeln in den Erhitzungsbereich mittels einer Pumpe eingeführt wird, die einen ausreichend hohen Druck in dem Erhitzungsbereich bereitstellt, so dass sich die Mikrokugeln in diesem nicht vollständig erweitern.

11. Vorrichtung zum Erweitern von nicht erweiterten, thermisch erweiterbaren thermoplastischen Mikrokugeln umfassend eine thermoplastische Polymerhülle, welche ein Treibmittel einkapselt, wobei die Vorrichtung einen Erhitzungsbereich umfasst, der einen Einlass und einen Auslass aufweist und einem Druck von mindestens 4 Bar standhalten kann, eine Einrichtung zum Einführen einer Aufschlämmung aus nicht erweiterten, erweiterbaren thermoplastischen Mikrokugeln in einem flüssigen Medium in den Erhitzungsbereich, die einen Druck von mindestens 4 Bar in dem Erhitzungsbereich erzeugen kann; und eine Einrichtung zum Erhitzen der Aufschlämmung aus erweiterbaren Mikrokugeln auf eine Temperatur von mindestens 60 °C ohne unmittelbaren Kontakt mit einem flüssigen Wärmeübertragungsmittel.

12. Vorrichtung nach Anspruch 11, wobei der Auslass mit einer Strömungsquerschnittsbegrenzung versehen ist, die ausreicht, um einen Druckabfall entsprechend dem Druckunterschied zwischen dem Inneren des Erhitzungsbereiches und dem Äußeren des Erhitzungsbereiches zu erzeugen.

13. Vorrichtung nach einem der Ansprüche 11 bis 12, wobei der Erhitzungsbereich aus einem Wärmetauscher mit mindestens einem Rohr oder einem Schlauch besteht, das/der von einem Wärmeübertragungsmittel umgeben ist, welches nicht in unmittelbarem Kontakt mit der Aufschlämmung aus erweiterbaren Mikrokugeln steht.

14. Vorrichtung nach einem der Ansprüche 11 bis 13, wobei der Erhitzungsbereich ein einziges Rohr oder einen einzigen Schlauch umfasst, das/der von einem Wärmeübertragungsmittel umgeben ist, welches nicht in unmittelbarem Kontakt mit der Aufschlämmung aus erweiterbaren Mikrokugeln steht.

15. Vorrichtung nach einem der Ansprüche 11 bis 12, wobei der Erhitzungsbereich mindestens ein Rohr oder einen Schlauch sowie elektrische Heizelemente aufweist, welche innerhalb und/oder außerhalb des mindestens einen Rohres oder Schlauches vorgesehen sind.

## Revendications

1. Procédé pour la préparation de microsphères thermoplastiques expansées à partir de microsphères thermoplastiques thermiquement expansibles non expansées comprenant une enveloppe en polymère thermoplastique encapsulant un agent gonflant, ledit procédé comprenant le fait :
(a) d'introduire, dans une zone de chauffage, une suspension de ces microsphères thermoplastiques expansibles dans un milieu liquide ;
(b) de chauffer la suspension dans la zone de chauffage, sans contact direct avec aucun milieu fluidique de transfert thermique, de sorte que les microsphères expansibles atteignent au moins une température à laquelle elles auraient commencé à se dilater à la pression atmosphérique, et de maintenir une pression dans la zone de chauffage suffisamment élevée pour que les microsphères dans la suspension ne se dilatent pas entièrement ; et,
(c) de retirer la suspension de microsphères expansibles de la zone de chauffage et la placer dans une zone où la pression est suffisamment faible pour entraîner l'expansion des microsphères.

2. Procédé tel que revendiqué dans la revendication 1, dans lequel la pression dans la zone de chauffage est maintenue entre 5 et 50 bars.

3. Procédé tel que revendiqué dans l'une quelconque des revendications 1 et 2, dans lequel la suspension de microsphères expansibles est chauffée dans la zone de chauffage à une température comprise entre 60 et 160°C.

4. Procédé tel que revendiqué dans l'une quelconque des revendications 1 à 3, dans lequel la suspension de microsphères expansibles s'écoule à travers une zone de chauffage qui est un échangeur de chaleur comprenant un/des tuyau(x) ou tube(s) entouré(s) par un milieu de transfert thermique qui n'est pas en contact direct avec la suspension de microsphères expansibles.

5. Procédé tel que revendiqué dans la revendication 4, dans lequel chacun du/des tuyau(x) ou tube(s) a un diamètre intérieur compris entre 2 et 25 mm.

6. Procédé tel que revendiqué dans l'une quelconque des revendications 1 à 3, dans lequel la chaleur est fournie par des éléments chauffants électriques.

7. Procédé tel que revendiqué dans l'une quelconque des revendications 1 à 6, dans lequel la suspension de microsphères expansibles est retirée de la zone de chauffage à travers une sortie de celle-ci, créant ainsi une chute de pression correspondant à la différence de pression entre la partie intérieure de la zone de chauffage et la partie extérieure de la zone de chauffage.

8. Procédé tel que revendiqué dans la revendication 7, dans lequel la sortie est pourvue d'une restriction de section d'écoulement pour créer la chute de pression.

9. Procédé tel que revendiqué dans l'une quelconque des revendications 1 à 8, dans lequel la suspension de microsphères expansibles est retirée de la zone de chauffage et placée dans une zone de pression atmosphérique.

10. Procédé tel que revendiqué dans l'une quelconque des revendications 1 à 9, dans lequel la suspension de microsphères expansibles est introduite dans la zone de chauffage au moyen d'une pompe fournissant une pression suffisamment élevée dans la zone de chauffage pour que les microsphères ne se dilatent pas entièrement dans celle-ci.

11. Dispositif pour l'expansion de microsphères thermoplastiques thermiquement expansibles non expansées comprenant une enveloppe en polymère thermoplastique encapsulant un agent gonflant, ledit dispositif comprenant une zone de chauffage ayant une entrée et une sortie et pouvant supporter une pression d'au moins 4 bars, un moyen permettant d'introduire, dans la zone de chauffage, une suspension de microsphères thermoplastiques expansibles non expansées dans un milieu liquide et pouvant générer une pression d'au moins 4 bars dans la zone de chauffage ; et, un moyen permettant de chauffer la suspension de microsphères expansibles à une température d'au moins 60°C sans contact direct avec aucun milieu fluidique de transfert thermique.

12. Dispositif tel que revendiqué dans la revendication 11, dans lequel la sortie est pourvue d'une restriction de section d'écoulement suffisante pour créer une chute de pression correspondant à la différence de pression entre la partie intérieure de la zone de chauffage et la partie extérieure de la zone de chauffage.

13. Dispositif tel que revendiqué dans l'une quelconque des revendications 11 et 12, dans lequel la zone de chauffage est un échangeur de chaleur comprenant un/des tuyau(x) ou tube(s) entouré(s) par un milieu de transfert thermique qui n'est pas en contact direct avec la suspension de microsphères expansibles.

14. Dispositif tel que revendiqué dans l'une quelconque des revendications 11 à 13, dans lequel la zone de chauffage comprend un seul tuyau ou tube entouré par un milieu de transfert thermique qui n'est pas en contact direct avec la suspension de microsphères expansibles.

15. Dispositif tel que revendiqué dans l'une quelconque des revendications 11 et 12, dans lequel la zone de chauffage comprend un/des tuyau(x) ou tube(s) et des éléments chauffants électriques prévus à l'intérieur et/ou à l'extérieur dudit/desdits tuyau(x) ou tube(s).
